# EUROPEAN PATENT APPLICATION

(11) **EP 0 927 902 A2**
(43) Date of publication of application: **07.07.1999**
(21) Application number: 99200248.5
(22) Date of filing: 29.01.1999
(51) Int. Cl.: G02B 23/08, G02B 17/06

(54) **Sun-observation device**

(30) Priority: 27.08.1998 GB 9818556; 12.10.1998 GB 9822212
(71) Applicant: Lock, Herbert Martin, Falmouth, Cornwall TR22 3XU (GB)
(72) Inventor: Lock, Herbert Martin, Falmouth, Cornwall TR22 3XU (GB)
(74) Representative: Harrison, Ivor Stanley

(57) **Abstract**

A device for direct viewing of the sun comprises a body member defining a housing including an objective aperture and a viewing aperture, the housing containing light-absorbing reflection means arrange to define a light pathway between said objective and viewing apertures, whereby total light transmittance is attenuated to an extent such as to enable the sun to be observed with safety.

## Description

This invention relates to means for enabling persons to make direct visual observations of the sun, in particular during partial and annular eclipses, without damage to the eyes.

A total and partial eclipse of the sun is due to occur in Europe in 1999 and elsewhere at other times and many people will wish to observe these events. However, the use of smoked glass or other conventional means of filtering sunlight for enabling direct observation of the sun is not entirely safe because the eye can be damaged by light scatter. It has been said that for safety the luminous transmittance of a light filter should not exceed 0.0032 percent and specific transmittance limits are laid down in EN169:1992, although some experts suggest this figure should be as low as 0.0003 percent (professor Ralph Chou - Associate Professor, School of Optometry, University of Waterloo, Canada) to take account of visual comfort.

When viewing an eclipse of the sun, when observers are likely to be watching closely over periods up to two hours, over-exposure of the eye to solar radiation can damage the cornea, lead to the development of cataracts and , of more immediate concern, can cause damage to the retina with resulting partial or total blindness. It is therefore of great importance that a device is available for observers to use with comfort, convenience and safety and which can be recommended for use by tourist authorities, safety organisations and other such bodies.

According to one aspect of the present invention, a device for viewing the sun comprises a body member defining a housing including an objective aperture and a viewing aperture, the housing containing optical elements consisting only of light-absorbing reflection means arranged to define a light pathway between said objective and viewing apertures the respective axes or planes of which subtend between them an angle, whereby total light transmittance is attenuated to an extent such as to enable the sun to be viewed with safety.

Preferably, the optical elements are contained entirely within the housing and the viewing aperture comprises a slot having internal walls parallel with the light pathway therethrough, although the viewing aperture may be of more conventional cylindrical construction, for viewing with one eye only, and optionally includes a pivoted or hinged element for protection of the other eye, when in the extended position, from glare. The plate may comprise a resilient cup-shaped formation for fitting to the face around the other eye, to provide more effective exclusion of light and correspondingly to allow the image viewed by the one eye to be more clearly seen. The wall of the slot or of the cylinder may extend within the housing close to the nearest of the optical elements associated with the viewing aperture. The subtended angle may be an obtuse angle but is preferably at or close to a right angle, whereby even with the sun at its maximum angle of elevation it can still be viewed with the user adopting a level or in most instances a slightly lowered head position.

The optical elements may comprise any transparent material capable of being formed with an optically-flat reflecting surface and capable of light absorption such that the total absorption results in residual transmission within the accepted limits. The material may comprise glass or a plastics material such as acrylic and preferably has a refractive index of a least 1.4, preferably approximately 1.5 with an upper limit of about 1.6 to 1.7. The material preferably contains dye to enhance the light-absorption properties. A material having a refractive index of 1.5 will reflect on average about 4% of the light incident upon it, including infra-red and ultra-violet light as well as visible. The reflector means may be constituted by plane elements, prisms or a combination thereof.

Desirably, the image viewed by the observer through the viewing aperture is upright, which implies two reflection means or a multiple of two. Whereas in the simplest embodiment two reflection means could be contemplated, disposed at a mutual angle of for example 45° to divert the light pathway through 90° without inversion, it is preferred to use four reflection means, whereby the first and second (with respect to the objective aperture) act as a couple to displace the light pathway laterally within the housing but parallel with the incident rays and the third and fourth act as a couple to deflect the pathway through (say) 90° without inversion to the viewing aperture.

The arrangement of the respective viewing and objective apertures in relation to the remainder of the housing is preferably such that there is no direct light pathway therebetween and furthermore the internal disposition of the reflection means should preferably be such that the breakage or dislodgement of any one reflection means should not result in an alternative light pathway being created between the viewing and objective apertures, since any such alternative light pathway would comprise less light-absorption capability.

The internal surfaces of the housing should preferably be coloured black or other light-absorbing colour. The body member may incorporate means for attachment to a tripod or means for gripping railings or other suitable supports, thereby enabling binoculars or other image-enhancing means to be used to view the image in the viewing aperture.

In another embodiment, the invention provides a method for observation of the sun, the method comprising pointing the objective aperture of a device as hereinbefore described at the sun and viewing the image thereof though the viewing aperture, the light rays incident through the objective aperture following a light-absorbing reflected pathway to the viewing aperture.

Embodiments of the invention will now be described with reference to the accompanying drawings, of which
Figure 1 shows a perspective view of a sun-observation device form the objective end;
Figure 2 shows the device of Figure 1 in use; and
Figure 3 shows the internal arrangement of the device of Figure 1.

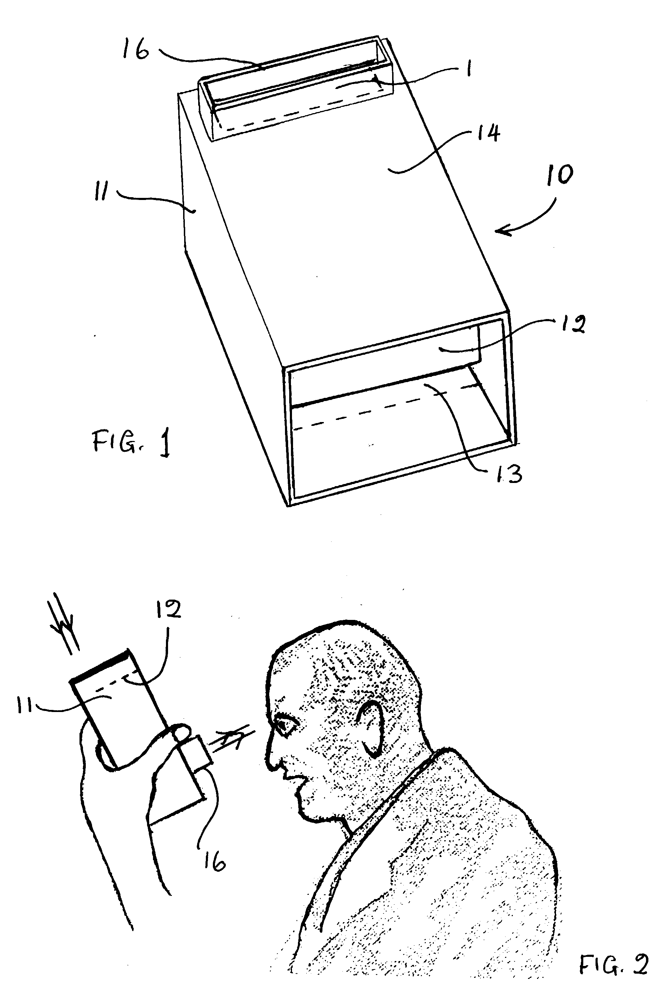

Referring firstly to Figure 1, the device shown generally at 10 has a rectangular box-shaped body 11 having a recessed wall 12 at one end which extends only part-way across the end, to leave a horizontal rectangular slot 13 for restricted access of light to the interior of the body. The upper face 14 is formed, towards the end remote from wall 12, with another rectangular slot 15 which is surrounded by an upstanding wall or combing 16 the purpose of which is to restrict access of peripheral light to the interior of the body except in a direction generally at a right angle to the face 14. The slot 13 in use constitutes the objective aperture and slot 15 constitutes the viewing aperture and the respective axial planes through the apertures - that is, the planes which light rays pass through in use and which are substantially normal to the respective slots - are at a right angle to each other, whereby a user observing the sun can point the objective aperture at an upward angle towards the sun and yet still see the image through the viewing aperture with a head-down posture, as shown in Figure 2.

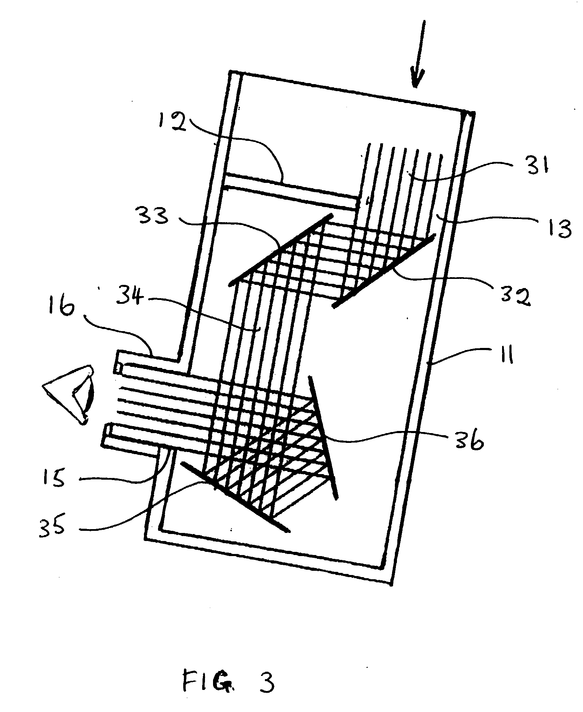

Referring to Figure 3, the incident light 31 entering the body or housing 11 through slot 13 falls initially on glass plate 32 set at 45° and is reflected (with some absorbance) to parallel-mounted glass plate 33. The plates 32 and 33 act as a couple and the non-absorbed reflected light rays 34 are parallel but displaced laterally compared with light rays 31. It will be understood that plates 32 and 33 need not be set at 45°; they could be set at another angle if it was desired to position one or both of them at a different location within the housing, for example to avoid risk of an undesired secondary reflectance pathway between the slots on the event of damage to a plate occurring, or to reduce or increase the total attenuation of the transmitted light.

Provided that it is intended that the rays 34 remain parallel with rays 31, the plates 32 and 33 must of course themselves be parallel, irrespective of their angle to the housing.

The rays 34 are then incident upon plates 35 and 36 mounted at a 45° angle between them. Plates 35, 36 exist as a further couple to reflect the rays with further absorbance through 90° so that they are normal to and in alignment with slot 15 for viewing by the user.

Total light transmittance though the device as described with reference to the drawings is approximately 0.0003% if glass of refractive index 1.5 is used for the reflecting plates, which makes the device both safe and comfortable for use in viewing the sun.

## Claims

1. A device for viewing the sun, the device comprising a body member defining a housing including an objective aperture and a viewing aperture the respective axes or planes of which subtend between them an angle, the housing containing optical elements consisting only of light-absorbing reflection means arranged to define a light pathway between said objective and viewing apertures, whereby total light transmittance is attenuated to an extent such as to enable the sun to be viewed with safety.

2. A device according to claim 1, in which the optical elements are contained entirely within the housing and the viewing aperture comprises a slot having internal walls parallel with the light pathway therethrough.

3. A device according to claim 1, in which the viewing aperture comprises a cylinder for viewing with one eye and includes an element for protecting the other eye from glare.

4. A device according to any preceding claim in which the subtended angle is at or close to a right angle.

5. A device according to any preceding claim, in which the optical elements comprise a transparent material capable of being formed with an optically-flat reflecting surface and capable of light absorption.

6. A device according to claim 5, in which the transparent material comprises a glass or a plastics material having a refractive index between 1.4 and 1.7.

7. A device according to any preceding claim, in which the transparent material contains dye to enhance the light-absorption properties.

8. A device according to any preceding claim including two reflection means acting as an objective aperture couple and two reflection means acting as a viewing aperture couple.

9. A device according to claim 8, including first and second reflection means, with respect to the objective aperture, acting as a couple to displace the light pathway laterally within the housing, but parallel with the incident rays, and third and fourth reflection means acting as a couple to deflect the pathway without inversion to the viewing aperture.

10. A device according to any preceding claim, in which the arrangement of the respective viewing and objective apertures in relation to the remainder of the housing is such that there is no direct light pathway therebetween and preferably the internal disposition of the reflection means is such that breakage or dislodgement of any one reflection means does not result in an alternative light pathway being created between the viewing and objective apertures.
